# EUROPEAN PATENT APPLICATION

(11) **EP 4 845 200 A1**
(43) Date of publication of application: **25.11.2026**
(21) Application number: 25747588.9
(22) Date of filing: 20.01.2025
(51) Int. Cl.: H04W 24/02

(54) **APPARATUS CONFIGURATION METHOD, AND COMMUNICATION APPARATUS AND SYSTEM**

(30) Priority: 04.02.2024 CN 202410165987
(71) Applicant: Huawei Technologies Co., Ltd., Shenzhen, Guangdong 518129 (CN)
(72) Inventor: MA, Ning, Shenzhen, Guangdong 518129 (CN); WU, Xiaochuan, Shenzhen, Guangdong 518129 (CN); GUO, Ziyu, Shenzhen, Guangdong 518129 (CN)
(74) Representative: Huawei European IPR
(86) International application number: PCT/CN2025/073192
(87) International publication number: WO 2025/162016

(57) **Abstract**

This application provides an apparatus configuration method, and a communication system and apparatus, to improve efficiency in site deployment or device replacement. The method is applied to a communication network, and the communication network may include a network management apparatus and one or more apparatuses configured to establish a connection to the network management apparatus. The method includes: A first apparatus is any one of the one or more apparatuses. If the first apparatus is replaced with a second apparatus, and the first apparatus is connected to one or more connection apparatuses before the replacement, then after the first apparatus is replaced with the second apparatus, the one or more connection apparatuses are connected to the second apparatus. The second apparatus sends first information, where the first information may include information stored by at least one connection apparatus. The second apparatus receives configuration information of the second apparatus, where the configuration information is used to configure the second apparatus, so that configuration of the new apparatus can be implemented based on the information from the connection apparatus.

## Description

This application claims priority to Chinese Patent Application No. 202410165987.6, filed with the China National Intellectual Property Administration on February 4, 2024 and entitled "APPARATUS CONFIGURATION METHOD, AND COMMUNICATION APPARATUS AND SYSTEM", which is incorporated herein by reference in its entirety.

### TECHNICAL FIELD

This application relates to the communication field, and in particular, to an apparatus configuration method, and a communication apparatus and system.

### BACKGROUND

Generally, new site deployment or site replacement of a base station involves two phases: installation and commissioning. In the installation phase, a site maintenance engineer complete hardware connections based on the installation drawings of the base station. In the commissioning phase, the site maintenance engineer provides the site name and the electronic serial number (electronic serial number, ESN) to a back-end network management engineer. The network management engineer configures site-deployment data based on the site name and the ESN, and notifies the site maintenance engineer that the configuration of the site-deployment data is completed. The site maintenance engineer then powers up the base station locally. After being powered up, the base station obtains the site-deployment data corresponding to the ESN from the element management system based on the ESN, thereby enabling activation of the base station.

In the foregoing method, manual or third-party involvement is required to activate a new base station or replace a base station. The activation procedure is complex, resulting in low site deployment efficiency. Therefore, how to improve apparatus configuration efficiency becomes an urgent problem to be resolved.

### SUMMARY

This application provides an apparatus configuration method, and a communication apparatus and system, to improve efficiency in apparatus replacement during site deployment or device replacement.

In view of this, according to a first aspect, this application provides an apparatus configuration method, which may be applied to a communication system. The communication system may also be referred to as a communication network. The communication system may include a network management apparatus and one or more apparatuses configured to establish a connection to the network management apparatus. The method includes: A first apparatus is any one of the one or more apparatuses. If the first apparatus is replaced with a second apparatus, and the first apparatus is connected to one or more connection apparatuses before the replacement, then after the first apparatus is replaced with the second apparatus, the one or more connection apparatuses are connected to the second apparatus. After the second apparatus is powered up, the second apparatus sends first information, where the first information may include information stored by at least one connection apparatus. The second apparatus receives configuration information, where the configuration information is used to configure the second apparatus, and the configuration information may include one or more parameters used when the second apparatus runs in the communication system, to support the second apparatus in running normally in the communication system.

The method provided in this implementation of this application may be applied to apparatus replacement in the communication system. A network management side generally stores configuration information corresponding to an old apparatus and information about a connection apparatus connected to the old apparatus. In other words, the network management side may store configuration information and information about a topology structure of each apparatus in the communication system. In this implementation of this application, when the apparatus is replaced, a new apparatus may obtain, from the network management side based on information stored by the connection apparatus, available configuration information of the new apparatus. The network management side may obtain the configuration information of the new apparatus based on the stored configuration information and information about the topology structure of each apparatus in the communication system, and deliver the configuration information to the new apparatus, to implement more intelligent apparatus configuration in apparatus replacement. In a configuration process of the apparatus, manual or third-party involvement may not be required, that is, manual or third-party involvement in a procedure is reduced, so that apparatus configuration efficiency can be improved.

In a possible implementation, the method may further include: The second apparatus updates configuration of the second apparatus based on the configuration information. After receiving the configuration information, the second apparatus may perform configuration based on the configuration information. For example, a first configuration parameter may carry a frequency, power, bandwidth, an azimuth, or other parameters of a sector of the second apparatus. The second apparatus may configure the frequency, the power, the bandwidth, the azimuth, or other parameters of the sector of the second apparatus based on the configuration information, so that the second apparatus can run normally in the communication system based on the configured parameter.

In a possible implementation, the at least one connection apparatus includes one or more of the following: an optical module, an antenna line apparatus, a global positioning system ground receiver, or a power supply. The optical module may be configured to perform conversion between an optical signal and an electrical signal, to convert the electrical signal into the optical signal for transmission. The antenna line apparatus is configured to provide hardware support for wireless transmission of data, and may convert an electrical signal into an electromagnetic wave signal, to perform wireless transmission on the data. The global positioning system ground receiver is configured to obtain positioning information. Therefore, in this implementation of this application, the connection apparatus may be specifically the optical module, the antenna line apparatus, the global positioning system ground receiver, the power supply, or the like, so that an available apparatus can be reused, thereby improving apparatus utilization.

In a possible implementation, the information stored by the at least one connection apparatus includes at least one of the following: a serial number of the optical module, a serial number of the antenna line apparatus, a serial number of the global positioning system receiver, or a serial number of the power supply module. Therefore, in this implementation of this application, the information stored by the connection apparatus may include identification information of each connection apparatus, so that the second apparatus can obtain a more accurate identifier of each connection apparatus, thereby obtaining configuration based on the more accurate information, and improving a success rate of obtaining a correct configuration.

In a possible implementation, the configuration information includes one or more of the following configuration information of the second apparatus: standard information, sector information, address information, or information about a virtual local area network to which the second apparatus belongs. The standard information may include information about a standard supported by the second apparatus, the sector information may include information about a sector corresponding to the second apparatus, the address information may include an address of the second apparatus when the second apparatus runs in the communication system, and the information about the virtual local area network to which the second apparatus belongs may include information about the second apparatus in the virtual local area network to which the second apparatus belongs, indicating that the second apparatus runs normally in the virtual local area network to which the second apparatus belongs.

In a possible implementation, the method may further include: The second apparatus obtains the first information. After being powered up, the second apparatus may obtain the information stored by the at least one connection apparatus configured to establish a connection, to subsequently request the configuration information from the network management apparatus.

In a possible implementation, that the second apparatus obtains the first information may include: The second apparatus reads the first information from the at least one connection apparatus, where before the first apparatus is replaced with the second apparatus, the first information corresponds to the first apparatus, and the first information includes information written by the first apparatus to storage space of the at least one connection apparatus. Therefore, in this implementation of this application, the first apparatus may directly write information to the connection apparatus (that is, the reused connection apparatus), so that the second apparatus obtains more accurate information based on the information stored by the connection apparatus, to obtain the required configuration information of the second apparatus, thereby improving a configuration success rate and improving configuration efficiency.

In a possible implementation, the first information may further include information about the first apparatus, for example, an ESN or a name of the first apparatus, or configuration information of the first apparatus. For example, after the first apparatus completes the configuration, if the storage space of the connection apparatus is not smaller than a size occupied by the configuration information of the first apparatus, the first apparatus may write the configuration information of the first apparatus to the storage space of the connection apparatus; or if the storage space of the connection apparatus is smaller than a size occupied by the configuration information of the first apparatus, the first apparatus may write identification information such as the ESN or the name of the first apparatus to the storage space of the connection apparatus, thereby implementing data backup of the first apparatus.

In a possible implementation, after the second apparatus receives the configuration information of the second apparatus, the method may further include: The second apparatus writes second information to the at least one connection apparatus, where the second information may include information about the second apparatus, for example, may include an identifier or a component type of the second apparatus, or all or some configuration information of the second apparatus, and the second information is used by a third apparatus to obtain a corresponding configuration from the network management apparatus after the second apparatus is replaced with the third apparatus. Therefore, in this implementation of this application, after completing the configuration, the second apparatus may further back up data in the connection apparatus, so that after the apparatus is replaced next time, a more accurate configuration may be obtained again based on the information stored by the connection apparatus.

In a possible implementation, the method may further include: The second apparatus sends the information about the second apparatus, for example, a name, an ESN, or a component type of the second apparatus. Therefore, when requesting the configuration information of the second apparatus from the network management apparatus, the second apparatus may further send the information about the second apparatus, so that when generating the configuration information of the second apparatus, the network management apparatus can generate, with reference to the information about the second apparatus, configuration information that is adaptive to the second apparatus. In addition, when updating the configuration information of the apparatus stored in the network management apparatus, the network management apparatus may associate the information about the second apparatus with the configuration information of the second apparatus, which is equivalent to storing a mapping relationship between the second apparatus and the configuration information of the second apparatus.

According to a second aspect, this application provides an apparatus configuration method, which may be applied to a communication system. The communication system may include a network management apparatus and one or more apparatuses configured to establish a connection to the network management apparatus. The method includes: A first apparatus is any one of the one or more apparatuses. If the first apparatus is replaced with a second apparatus, the network management apparatus receives first information, where the first information includes information stored by at least one connection apparatus, and the at least one connection apparatus is an apparatus configured to establish a connection to the second apparatus. The network management apparatus sends configuration information of the second apparatus based on the first information, where the configuration information of the second apparatus is used to configure the second apparatus.

In this implementation of this application, after the first apparatus is replaced with the second apparatus, the second apparatus may request the configuration information of the second apparatus from the network management apparatus based on the information stored by the connection apparatus. Therefore, after the apparatus is replaced, in a configuration process of the new apparatus, configuration of the new apparatus can be implemented without manual or third-party involvement, thereby improving configuration efficiency of the new apparatus.

In a possible implementation, that the network management apparatus sends the configuration information of the second apparatus based on the first information may include: The network management apparatus obtains configuration information of the first apparatus from associated data based on the first information, where the associated data includes configuration information of a plurality of apparatuses, and the plurality of apparatuses include the first apparatus. The network management apparatus sends the configuration information of the second apparatus based on the configuration information of the first apparatus, for example, may use the configuration information of the first apparatus as the configuration information of the second apparatus, or generate the configuration information of the second apparatus based on the configuration information of the first apparatus.

In this implementation of this application, the network management apparatus may extract the configuration information of the first apparatus from the obtained associated data, and obtain the configuration information of the second apparatus based on the configuration information of the first apparatus.

In a possible implementation, that the network management apparatus sends the configuration information of the second apparatus based on the configuration information of the first apparatus may include: The network management apparatus uses the configuration information of the first apparatus as the configuration information of the second apparatus, and sends the configuration information of the second apparatus.

In this implementation of this application, the network management apparatus may directly use the configuration of the old apparatus as the configuration of the new apparatus. For example, in a scenario in which a model of the replaced new apparatus is the same as that of the old apparatus, the configuration of the new apparatus can be quickly implemented.

In a possible implementation, the method may further include: receiving information about the second apparatus, and that the network management apparatus sends the configuration information of the second apparatus based on the configuration information of the first apparatus may include: The network management apparatus generates the configuration information of the second apparatus for the second apparatus based on the configuration information of the first apparatus and the information about the second apparatus, and sends the configuration information of the second apparatus.

In this implementation of this application, the network management apparatus generates, for the new apparatus based on the configuration of the old apparatus and the information about the new apparatus, adaptive configuration information of the second apparatus, thereby improving configuration efficiency and a configuration success rate of the new apparatus.

According to a third aspect, this application provides an apparatus configuration method, including:

A connection apparatus receives backup data sent by a first apparatus, and stores the backup data in local storage space. After the first apparatus is replaced with a second apparatus, if a read message of the second apparatus is received, where the read message indicates to read the backup data stored in the storage space, the connection apparatus sends the backup data sent by the first apparatus to the second apparatus.

Therefore, in this implementation of this application, data may be backed up in storage space of the connection apparatus. When an apparatus in a communication system is replaced, a new apparatus may read data from the storage space. The data may be used by the new apparatus to request configuration information from a network management apparatus. Therefore, in a configuration process of the new apparatus, configuration of the new apparatus can be implemented without manual or third-party involvement.

In a possible implementation, the data stored in the storage space may be specifically configuration information of the first apparatus. Therefore, the second apparatus may directly read the configuration information of the first apparatus from the connection apparatus, to obtain configuration information of the second apparatus based on the configuration information of the first apparatus.

In a possible implementation, the data stored in the storage space may be specifically identification information, a component type, or the like of the first apparatus. Therefore, the new apparatus may read an identifier or a component type of the old apparatus, to request the configuration information of the second apparatus from the network management apparatus based on information about the old apparatus.

In a possible implementation, after completing the configuration, the second apparatus may further back up data in the storage space of the connection apparatus. For example, identification information or a component type of the second apparatus, or the configuration information of the second apparatus is written to the storage space, so that when the apparatus is replaced next time, configuration of a replaced apparatus can be obtained based on the backup data.

According to a fourth aspect, this application provides an apparatus configuration method, which may be applied to a communication system. The communication system may include a network management apparatus and one or more connection apparatuses configured to establish a connection to the network management apparatus. The method includes:

A first apparatus is any one of the one or more apparatuses. If the first apparatus is replaced with a second apparatus, the second apparatus sends first information to the network management apparatus, where the first information includes information stored by at least one connection apparatus, the at least one connection apparatus is an apparatus configured to establish a connection to the second apparatus, and before the first apparatus is replaced, the at least one connection apparatus is connected to the first apparatus.

The network management apparatus sends configuration information of the second apparatus to the second apparatus based on the first information, where the configuration information of the second apparatus may be used to configure the second apparatus.

In this implementation of this application, the new apparatus after the replacement may request the configuration information of the second apparatus from the network management apparatus based on the information stored by the connection apparatus. Therefore, after the apparatus is replaced, in a configuration process of the new apparatus, configuration of the new apparatus can be implemented without manual or third-party involvement, thereby improving configuration efficiency of the new apparatus.

In a possible implementation, the method may further include: The second apparatus updates a local configuration based on the configuration information of the second apparatus.

In a possible implementation, the at least one connection apparatus includes one or more of the following: an optical module, an antenna line apparatus, a global positioning system ground receiver, or a power supply. The optical module may be configured to perform conversion between an optical signal and an electrical signal, to convert the electrical signal into the optical signal for transmission. The antenna line apparatus is configured to provide hardware support for wireless transmission of data, and may convert an electrical signal into an electromagnetic wave signal, to perform wireless transmission on the data. The global positioning system ground receiver is configured to obtain positioning information. Therefore, in this implementation of this application, the connection apparatus may be specifically the optical module, the antenna line apparatus, the global positioning system ground receiver, the power supply, or the like, so that an available apparatus can be reused, thereby improving apparatus utilization.

In a possible implementation, the information stored by the at least one connection apparatus includes at least one of the following: a serial number of the optical module, a serial number of the antenna line apparatus, a serial number of the global positioning system receiver, or a serial number of the power supply module. Therefore, in this implementation of this application, the information stored by the connection apparatus may include identification information of each connection apparatus, so that the second apparatus can obtain a more accurate identifier of each connection apparatus, thereby obtaining configuration based on the more accurate information, and improving a success rate of obtaining a correct configuration.

In a possible implementation, the method may further include: The second apparatus obtains the first information. After being powered up, the second apparatus may obtain the information stored by the at least one connection apparatus configured to establish a connection, to subsequently request the configuration information from the network management apparatus.

In a possible implementation, that the second apparatus obtains the first information may include: The second apparatus reads the first information from the at least one connection apparatus, where the first information includes information written by the first apparatus to storage space of the at least one connection apparatus. Therefore, in this implementation of this application, the first apparatus may directly write information to the connection apparatus (that is, the reused connection apparatus), so that the second apparatus obtains more accurate information based on the information stored by the connection apparatus, to obtain the required configuration information of the second apparatus, thereby improving a configuration success rate and improving configuration efficiency.

In a possible implementation, the first information may further include information about the first apparatus, for example, an ESN or a name of the first apparatus, or configuration information of the first apparatus. For example, after the first apparatus completes the configuration, if the storage space of the connection apparatus is not smaller than a size occupied by the configuration information of the first apparatus, the first apparatus may write the configuration information of the first apparatus to the storage space of the connection apparatus; or if the storage space of the connection apparatus is smaller than a size occupied by the configuration information of the first apparatus, the first apparatus may write identification information such as the ESN or the name of the first apparatus to the storage space of the connection apparatus, thereby implementing data backup of the first apparatus.

In a possible implementation, after the second apparatus receives the configuration information of the second apparatus, the method may further include: The second apparatus writes second information to the at least one connection apparatus, where the second information is used by a third apparatus to obtain a corresponding configuration from the network management apparatus after the second apparatus is replaced with the third apparatus. Therefore, in this implementation of this application, after completing the configuration, the second apparatus may further back up data in the connection apparatus, so that after the apparatus is replaced next time, a more accurate configuration may be obtained again based on the information stored by the connection apparatus.

In a possible implementation, the method may further include: The second apparatus sends information about the second apparatus, for example, a name, an ESN, or a component type of the second apparatus. Therefore, when requesting the configuration information of the second apparatus from the network management apparatus, the second apparatus may further send the information about the second apparatus, so that when generating the configuration information of the second apparatus, the network management apparatus can generate, with reference to the information about the second apparatus, configuration information that is adaptive to the second apparatus. In addition, when updating the configuration information of the second apparatus stored in the network management apparatus, the network management apparatus may associate the information about the second apparatus with the configuration information of the second apparatus, which is equivalent to storing a mapping relationship between the second apparatus and the configuration information of the second apparatus.

In a possible implementation, that the network management apparatus sends the configuration information of the second apparatus based on the first information may include: The network management apparatus obtains the configuration information of the first apparatus from associated data based on the first information, where the associated data includes configuration information of a plurality of apparatuses, and the plurality of apparatuses include the first apparatus. The network management apparatus sends the configuration information of the second apparatus.

In this implementation of this application, the network management apparatus may extract the configuration information of the first apparatus from the obtained associated data, to obtain the configuration information of the second apparatus.

In a possible implementation, that the network management apparatus sends the configuration information of the second apparatus based on the configuration information of the first apparatus may include: The network management apparatus uses the configuration information of the first apparatus as the configuration information of the second apparatus, and sends the configuration information of the second apparatus.

In this implementation of this application, the network management apparatus may directly use the configuration of the old apparatus as the configuration of the new apparatus. For example, in a scenario in which a model of the replaced new apparatus is the same as that of the old apparatus, the configuration of the new apparatus can be quickly implemented.

In a possible implementation, the first information further includes the information about the second apparatus, and that the network management apparatus sends the configuration information of the second apparatus based on the configuration information of the first apparatus includes: The network management apparatus generates the configuration information of the second apparatus for the second apparatus based on the configuration information of the first apparatus and the information about the second apparatus, and sends the configuration information of the second apparatus.

In this implementation of this application, the network management apparatus generates, for the new apparatus based on the configuration of the old apparatus and the information about the new apparatus, adaptive configuration information of the second apparatus, thereby improving configuration efficiency and a configuration success rate of the new apparatus.

According to a fifth aspect, this application provides a communication apparatus, including:
a transceiver module, configured to send first information if a first apparatus is replaced with a second apparatus, where the first information includes information stored by at least one connection apparatus, the at least one connection apparatus is an apparatus configured to establish a connection to the second apparatus, and before the first apparatus is replaced, the at least one connection apparatus is connected to the first apparatus.

The transceiver module is further configured to receive configuration information of the second apparatus, where the configuration information of the second apparatus is used to configure the second apparatus.

For effect achieved in any one of the fifth aspect and the optional implementations of the fifth aspect, refer to the descriptions in any one of the first aspect or the optional implementations of the first aspect. Details are not described herein again.

In a possible implementation, the apparatus may further include an update module, configured to update a local configuration based on the configuration information of the second apparatus.

In a possible implementation, the at least one connection apparatus includes one or more of the following: an optical module, an antenna line apparatus, a global positioning system ground receiver, or a power supply. The optical module may be configured to perform conversion between an optical signal and an electrical signal, to convert the electrical signal into the optical signal for transmission. The antenna line apparatus is configured to provide hardware support for wireless transmission of data, and may convert an electrical signal into an electromagnetic wave signal, to perform wireless transmission on the data. The global positioning system ground receiver is configured to obtain positioning information.

In a possible implementation, the information stored by the at least one connection apparatus includes at least one of the following: a serial number of the optical module, a serial number of the antenna line apparatus, a serial number of the global positioning system receiver, or a serial number of the power supply module.

In a possible implementation, the configuration information of the second apparatus includes one or more of the following configuration information of the second apparatus: standard information, sector information, address information, or information about a virtual local area network to which the second apparatus belongs.

In a possible implementation, the transceiver module is further configured to obtain the first information.

In a possible implementation, the transceiver module is specifically configured to read the first information from the at least one connection apparatus, where the first information includes information written by the first apparatus to storage space of the at least one connection apparatus.

In a possible implementation, the transceiver module is further configured to: after receiving the configuration information of the second apparatus, write second information to the at least one connection apparatus, where the second information is used by a third apparatus to obtain a corresponding configuration from a network management apparatus after the second apparatus is replaced with the third apparatus.

In a possible implementation, the transceiver module is further configured to send information about the second apparatus.

According to a sixth aspect, this application provides a network management apparatus, including:
a transceiver module, configured to receive first information, where the first information includes information about at least one connection apparatus, and the at least one connection apparatus is an apparatus configured to establish a connection to a second apparatus.

The transceiver module is further configured to send configuration information of the second apparatus based on the first information, where the configuration information of the second apparatus is used to configure the second apparatus.

For effect achieved in any one of the sixth aspect and the optional implementations of the sixth aspect, refer to the descriptions in any one of the second aspect or the optional implementations of the second aspect. Details are not described herein again.

In a possible implementation, the network management apparatus may further include:
a processing module, configured to obtain configuration information of the first apparatus from associated data based on the first information, where the associated data includes data of a plurality of apparatuses, the plurality of apparatuses may include the first apparatus, and the configuration information of the first apparatus is the configuration information of the first apparatus.

The transceiver module is further configured to send the configuration information of the second apparatus based on the configuration information of the first apparatus.

In a possible implementation, the processing module is configured to use the configuration information of the first apparatus as the configuration information of the second apparatus.

In a possible implementation, the transceiver module is further configured to receive information about the second apparatus.

The processing module is configured to generate the configuration information of the second apparatus for the second apparatus based on the configuration information of the first apparatus and the information about the second apparatus.

In a possible implementation, the configuration information of the second apparatus includes one or more of the following configuration information of the second apparatus: standard information, sector information, address information, or information about a virtual local area network to which the second apparatus belongs.

According to a seventh aspect, this application provides a communication system, including a network management apparatus and a second apparatus.

The second apparatus may be configured to perform the steps performed by the second apparatus in any one of the first aspect or the optional implementations of the first aspect.

The network management apparatus may be configured to perform the steps performed by the network management apparatus in any one of the second aspect or the optional implementations of the second aspect.

Optionally, the communication system may further include at least one connection apparatus, configured to perform the steps performed by the second apparatus in any one of the third aspect or the optional implementations of the third aspect.

According to an eighth aspect, an embodiment of this application provides a communication apparatus, including a processor and a memory. The processor and the memory are interconnected through a line, and the processor invokes program code in the memory to perform a processing-related function in the method shown in any one of the first aspect or the optional implementations of the first aspect. Optionally, the communication apparatus may be a chip.

According to a ninth aspect, an embodiment of this application provides a communication apparatus, including a processor and a memory. The processor and the memory are interconnected through a line, and the processor invokes program code in the memory to perform a processing-related function in the method shown in any one of the first aspect or the optional implementations of the first aspect. Optionally, the communication apparatus may be a chip.

According to a tenth aspect, an embodiment of this application provides a communication apparatus. The communication apparatus may also be referred to as a digital processing chip or a chip. The chip includes a processing unit and a communication interface. The processing unit obtains program instructions through the communication interface, the program instructions are executed by the processing unit, and the processing unit is configured to perform a processing-related function in any one of the optional implementations of the first aspect or the second aspect.

According to an eleventh aspect, an embodiment of this application provides a computer-readable storage medium including instructions. When the instructions are run on a computer, the computer is caused to perform the method in any one of the optional implementations of the first aspect or the second aspect.

According to a twelfth aspect, an embodiment of this application provides a computer program product including instructions. When the computer program product is run on a computer, the computer is caused to perform the method in any one of the optional implementations of the first aspect or the second aspect.

### BRIEF DESCRIPTION OF DRAWINGS

FIG. 1 is a diagram of an architecture of a communication system according to this application;
FIG. 2 is a diagram of an architecture of another communication system according to this application;
FIG. 3 is a schematic flowchart of an apparatus configuration method according to this application;
FIG. 4 is a schematic flowchart of another apparatus configuration method according to this application;
FIG. 5 is a diagram of configuration information according to this application;
FIG. 6 is a diagram of an application scenario according to this application;
FIG. 7 is a diagram of a data format according to this application;
FIG. 8 is a diagram of another data format according to this application;
FIG. 9 is a diagram of other configuration information according to this application;
FIG. 10 is a schematic flowchart of another apparatus configuration method according to this application;
FIG. 11 is a diagram of a structure of a communication apparatus according to this application;
FIG. 12 is a diagram of a structure of a network management apparatus according to this application; and
FIG. 13 is a diagram of a structure of another communication apparatus according to this application.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application. All other embodiments obtained by a person of ordinary skill in the art based on embodiments of this application without creative efforts shall fall within the protection scope of this application.

The technical solutions in embodiments of this application may be applied to various communication systems, for example, a long term evolution (long term evolution, LTE) network, an LTE frequency division duplex (frequency division duplex, FDD) network, an LTE time division duplex (time division duplex, TDD) network, a 5th generation (5th generation, 5G) mobile communication network or a new radio (new radio, NR) network, a non-terrestrial network (non-terrestrial network, NTN), a future communication network, or another similar communication network. In this application, the network may also be referred to as a system. Network architectures and service scenarios described in this application are intended to describe the technical solutions in this application more clearly, and do not constitute a limitation on the technical solutions provided in this application. A person of ordinary skill in the art may know that: With evolution of network architectures and emergence of new service scenarios, the technical solutions provided in this application are also applicable to similar technical problems.

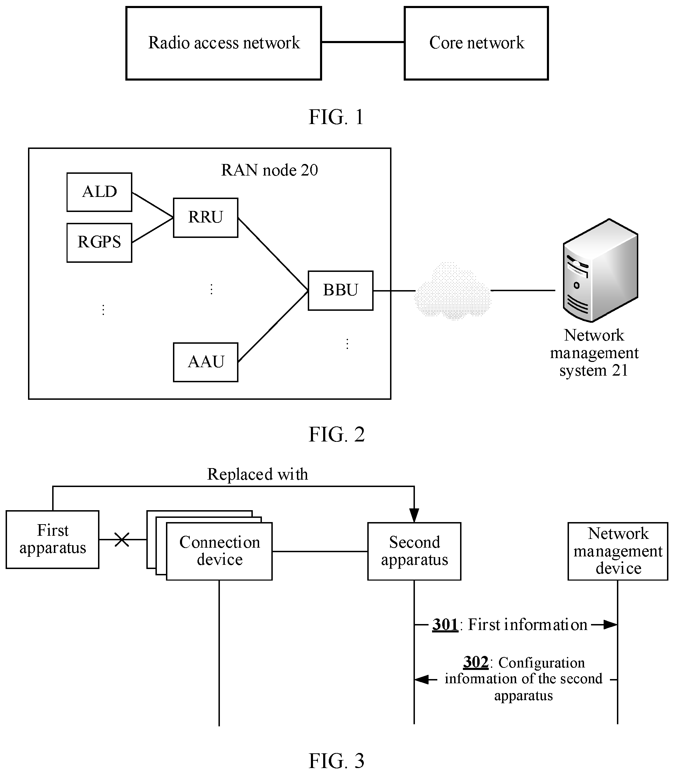

FIG. 1 is a diagram of a possible and non-limitative communication system (or referred to as a communication network). As shown in FIG. 1, the communication system includes a radio access network (radio access network, RAN) and a core network (core network, CN). The RAN includes at least one RAN node and at least one user equipment. The RAN may also include other RAN nodes, for example, a wireless relay device and/or a wireless backhaul device (not shown in FIG. 1). The user equipment is connected to the RAN node in a wireless manner. The RAN node is connected to the core network in a wireless or wired manner. A core network device in the core network and the RAN node in the RAN may be different physical devices, or may be a same physical device that integrates a logical function of the core network and a logical function of the radio access network.

The RAN may be a cellular system related to the 3rd generation partnership project (3rd generation partnership project, 3GPP), for example, a 4G or 5G mobile communication system or a future-oriented evolved system (for example, a 6G mobile communication system). Alternatively, the RAN may be an open access network (open RAN, O-RAN or ORAN), a non-terrestrial network (non-terrestrial network, NTN) system, or a wireless fidelity (wireless fidelity, Wi-Fi) system. The RAN may alternatively be a communication system that integrates two or more of the foregoing systems.

The RAN node may also be sometimes referred to as an access network device, an access device, a RAN entity, an access node, or the like, and forms a part of a communication system, to help a terminal implement radio access. A plurality of RAN nodes in the communication system may be nodes of a same type, or may be nodes of different types. The RAN node and the user equipment are sometimes referred to as communication apparatuses.

In a possible scenario, the RAN node may be a base station (base station), a satellite base station, an evolved NodeB (evolved NodeB, eNodeB), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station, a micro base station, an indoor base station, a relay node, or a donor node, or may be a radio controller in a cloud radio access network (cloud radio access network, CRAN) scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU).

In another possible scenario, a plurality of RAN nodes coordinate to assist the user equipment in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a radio remote unit (remote radio unit, RRU), a remote radio head (remote radio head, RRH), a radio frequency processing unit (radio frequency unit, RFU), or an active antenna processing unit (active antenna unit, AAU).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU.

In this application, an example in which the RAN node is referred to as an access network device is used for description.

For example, FIG. 2 is a diagram of an architecture of another communication system according to this application. The communication system may include a RAN node 20 and a network management system 21, and the network management system may include at least one network management apparatus.

The network management system can be deployed independently or in a core network.

Correspondingly, the network management system may perform configuration for all or some functions implemented by the RAN node, for example, perform resource configuration or resource scheduling for the RAN node.

In addition, an apparatus connected to the RAN node may further include an optical module, an antenna line device (antenna line device, ALD), a remote global positioning system (remote global positioning system, RGPS), a power supply module, or the like. The power supply module may specifically include a module used for power supply, for example, an uninterruptible power supply (uninterruptible power supply, UPS) or a battery. The apparatus connected to the RAN node may also be referred to as a peripheral device, a connection apparatus, an interconnection device, or the like. The foregoing apparatus and the RAN node may be integrated, or may be separately disposed. This is not limited in this application.

The connection apparatus connected to the RAN node may be configured to provide support for running of a base station, for example, may provide hardware support, provide energy, and provide wireless transmission support for a wireless communication function of the base station.

The optical module may implement conversion between an optical signal and an electrical signal, and may be used for information transmission between a DU and an RU in the RAN node.

The ALD may be configured to convert an electrical signal into an electromagnetic wave signal, to perform wireless transmission on data. When the RAN node is an RU, the RU may communicate with the ALD according to antenna interface standards group (antenna interface standards group, AISG) protocol specifications, or may communicate with the ALD according to a protocol agreed upon between the RU and the ALD, or the like.

The RGPS may be used in the RAN node to implement a positioning function.

The power supply module may be configured to provide electric energy for the RAN node, and may specifically include a UPS, a battery, or the like. The UPS is a power supply including an energy storage apparatus. When the UPS is connected to the RAN node, the UPS may provide an uninterruptible power supply for the RAN node. The battery is also an energy storage apparatus, and may consume energy stored in the battery to directly provide electric energy for the RAN node. A connection between the RAN node and the connection apparatus is used to implement a running, data processing, or transmission function of an access network device.

Generally, new site deployment or site replacement of a base station involves two phases: installation and commissioning. In the installation phase, a site maintenance engineer complete hardware connections based on the installation drawings of the base station. In the commissioning phase, first, the site maintenance engineer provides the site name and the electronic serial number (electronic serial number, ESN) to a back-end network management engineer. The network management engineer configures site-deployment data based on the site name and the ESN, and notifies the site maintenance engineer that the configuration of the site-deployment data is completed. The site maintenance engineer then powers up the base station locally. After being powered up, the base station obtains the site-deployment data corresponding to the ESN from the element management system based on the ESN, thereby enabling activation of the base station. Therefore, in the commissioning phase, the front-end site maintenance engineer needs to communicate with the back-end network management engineer about the ESN of the currently installed base station, so that the base station can obtain the site-deployment data based on the ESN after being powered up, to activate the base station. The activation procedure in the existing solution is complex.

Secondly, current site deployment of the base station is based on a network element granularity. The site-deployment data of the base station includes two parts: a DU and an RU. A network planning engineer needs to plan the DU and RU used by the site based on the site name. The front-end maintenance engineer needs to strictly follow a planned apparatus list and accurately install apparatuses in corresponding locations.

In addition, in some possible solutions, a method for obtaining site-deployment data based on location information of a to-be-deployed site is further used to implement automatic obtaining of the site-deployment data in a base station activation process to complete base station activation. The site-deployment data is obtained by reporting the site location information, which relatively reduces a manual intervention process. However, in the method for configuring the site-deployment data based on the site location, the network management system can learn of only the site location, but cannot accurately learn of a specific device for which the site-deployment data is configured, and therefore cannot confirm installation statuses of all modules at the site. In addition, for a front-end radio frequency apparatus, correctness of an installation azimuth of the apparatus and configuration accuracy of a plurality of front-end radio frequency apparatuses at similar locations cannot be determined. That is, third-party access is required for site deployment or site replacement.

Therefore, this application provides an apparatus configuration method, to improve efficiency in site deployment or device replacement.

FIG. 3 is a schematic flowchart of an apparatus configuration method according to this application. The method may include the following steps.

301: After a first apparatus is replaced with a second apparatus, the second apparatus sends first information to a network management apparatus.

The first apparatus or the second apparatus may be specifically a module in the foregoing RAN node. For example, the first apparatus or the second apparatus may be at least one module such as an AAU, an RRU, an RRH, an RFU, or an RU. The first apparatus and the second apparatus may be modules of a same type, for example, both may be AAUs, or certainly may be modules of different types. For example, the first apparatus is an AAU, and the second apparatus is an RRU.

After the first apparatus is replaced with the second apparatus, one or more connection apparatuses connected to the first apparatus before the replacement may be reused, that is, the one or more connection apparatuses are configured to establish a connection to the second apparatus. The one or more connection apparatuses may specifically include but are not limited to the foregoing modules such as the optical module, the ALD, the RGPS, and the UPS.

The first information may include information stored by the one or more connection apparatuses.

In a possible implementation, the information stored by the one or more connection apparatuses may specifically include identification information of the connection apparatus. For example, the information stored by the one or more connection apparatuses may be but is not limited to: a serial number (serial number, SN) of the optical module, an SN of the ALD, an SN of the RGPS, or an identifier of a power supply module (for example, an SN of the UPS). Specifically, when the one or more connection apparatuses include the optical module, the first information may include the SN of the optical module. When the one or more connection apparatuses include the ALD, the first information includes the SN of the ALD. When the one or more connection apparatuses include the RGPS, the first information may include the SN of the RGPS. When the one or more connection apparatuses include the power supply module, the first information may include the identifier of the power supply module, for example, the SN of the UPS.

In addition, the information stored by the connection apparatus may further include information about the first apparatus, that is, the first information may further include the information about the first apparatus. The information about the first apparatus may specifically include identity information of the first apparatus (for example, an ESN or an apparatus name of the first apparatus), a component type of the first apparatus, or the like.

If storage space for storing data is set in the connection apparatus, before the first apparatus is replaced, the first apparatus may write data to the storage space. For example, the first apparatus may write identification information (for example, information such as a serial number or a name) of the first apparatus and configuration information of the first apparatus. After the first apparatus is replaced with the second apparatus, the second apparatus may actively read the data stored in the storage space, or the connection apparatus sends the data in the storage space to the second apparatus, so that the second apparatus obtains the information stored by the connection apparatus.

Therefore, after the first apparatus is replaced with the second apparatus, when the first apparatus writes the identification information of the first apparatus to the storage space, the second apparatus may read the identification information of the first apparatus, to subsequently obtain configuration information of the second apparatus.

In a possible implementation, the second apparatus may further send information about the second apparatus to the network management apparatus, so that the network management apparatus can configure more adaptive configuration information for the second apparatus based on the information about the second apparatus.

In some possible scenarios, before the first apparatus is replaced, the first apparatus before the replacement may further write the configuration information of the first apparatus to the storage space set in the connection apparatus, and the second apparatus may read the configuration information of the first apparatus from the storage space. For the configuration information of the first apparatus, refer to descriptions of the configuration information of the second apparatus in the following step 302. Details are not described herein.

In a scenario in which the second apparatus reads the configuration information of the first apparatus from the connection apparatus, the second apparatus may use the configuration information of the first apparatus as the configuration information of the second apparatus, so that the second apparatus can efficiently obtain the information about the second apparatus based on the information stored by the connection apparatus. The second apparatus may also send the information about the first apparatus to the network management apparatus, and the network management apparatus obtains the configuration information of the second apparatus based on the configuration information of the first apparatus, so that efficiency of obtaining the configuration information of the second apparatus by the network management apparatus can be improved.

302: The network management apparatus sends the configuration information of the second apparatus to the second apparatus.

A network management system may store associated data, where the associated data may include configuration information of each apparatus in a communication system and information about a topology structure of each apparatus.

The configuration information of each apparatus may specifically include configuration information of one or more apparatuses in the communication system, and the configuration information of each apparatus may be used to support the apparatus in performing communication in a communication network. The configuration information of each apparatus may specifically include a configuration parameter of a communication resource of the apparatus, to support the apparatus in running in the communication network.

The information about the topology structure of each apparatus may include information about a connection relationship between apparatuses in the communication system or between each apparatus and a corresponding connection apparatus. Each apparatus in the communication system may include the first apparatus before the replacement. Correspondingly, the information about the topology structure of each apparatus may include information about a connection relationship between the first apparatus before the replacement and the one or more connection apparatuses connected to the first apparatus before the replacement.

The network management apparatus may obtain the configuration information of the first apparatus from the associated data based on the first information sent by the second apparatus. For example, the configuration information of the first apparatus may be obtained by querying the associated data based on an identifier of the one or more connection apparatuses carried in the first information.

The configuration information of the second apparatus is obtained based on the configuration information of the first apparatus. For example, the configuration information of the first apparatus may be used as the configuration information of the second apparatus, or the configuration information of the first apparatus is adjusted to obtain the configuration information of the second apparatus. A manner of adjusting the configuration information of the first apparatus may specifically include adjusting the configuration information of the first apparatus to a radio resource configuration parameter configured for the second apparatus, adjusting the configuration information of the first apparatus to a hardware configuration parameter for the second apparatus, or the like.

Then, the network management apparatus sends the configuration information of the second apparatus to the second apparatus. The configuration information of the second apparatus may be used to configure the second apparatus, to support the second apparatus in running in the communication network.

Optionally, the configuration information of the second apparatus in this implementation of this application may specifically include but is not limited to one or more of the following information: standard information, sector information, address information, information about a virtual local area network to which the second apparatus belongs, or the like.

The standard information may include information about a network standard supported by the second apparatus. For example, the standard information may be an LTE standard, an NR standard, or the like. That is, if the standard information is the LTE standard, the second apparatus supports the LTE standard.

The sector information may include information about a sector of the second apparatus, and may specifically include a frequency, power, bandwidth, an azimuth, or other information of the sector. For example, a radio signal coverage area of a base station may be generally divided into a plurality of sectors, and each apparatus in the base station may cover one or more of the sectors. For example, the sector information configured for the second apparatus may include information about a sector supported by the second apparatus. For example, the sector information may be information about a sector 1, a sector 2, or a sector 3. If the sector information is information about the sector 1, that the second apparatus corresponds to the sector 1 may also be understood as that the second apparatus provides a communication function for a user served by the sector 1, and so on.

The address information may include a plurality of types of addresses of the second apparatus. For example, the address information may include at least one of an IP address and a call home address. For example, if the address information includes the IP address, an IP address of the second apparatus is the IP address in the address information.

The information about the virtual local area network may include information about the second apparatus in the virtual local area network, for example, an identifier or a name of the second apparatus in the virtual local area network. For example, the information about the virtual local area network may include an identifier (identifier, ID) of the virtual local area network. For example, the identifier of the virtual local area network may be represented by a virtual local area network (virtual local area network, VLAN) ID.

The method provided in this implementation of this application may be applied to apparatus replacement in the communication system. The network management system generally stores configuration information corresponding to an apparatus before replacement and information about a connection apparatus connected to the apparatus before the replacement. In other words, the network management system may store configuration information and information about a topology structure of each apparatus in the communication system. In this implementation of this application, when the apparatus is replaced, a replaced apparatus may obtain, from the network management system based on information stored by the apparatus before the replacement, available configuration information of the new apparatus. The network management system may obtain the configuration information of the new apparatus based on the stored configuration information and information about the topology structure of each apparatus in the communication system, and deliver the configuration information to the new apparatus, to implement more intelligent apparatus configuration in apparatus replacement. In a configuration process of the apparatus, manual or third-party involvement may not be required, that is, manual or third-party involvement in a procedure is reduced, so that apparatus configuration efficiency can be improved. In addition, in comparison with a manner of performing configuration based on apparatus positioning, in this implementation of this application, the information about the connection apparatus is used to request the configuration information from the network management apparatus, so that the network management apparatus can more accurately distinguish a front-end apparatus from a remote apparatus, thereby implementing a more accurate apparatus configuration.

The following describes step 302 in detail.

First, the network management system may store the associated data, where the associated data may specifically include information about each apparatus in the communication network and corresponding configuration information. For example, an ESN of each apparatus and corresponding configuration information may be included, that is, the ESN of each apparatus is associated with the configuration information, so that the network management system can query for the configuration information of the apparatus based on the ESN of the apparatus.

The associated data may further include information about a connection apparatus corresponding to each apparatus. The information about the connection apparatus corresponding to each apparatus is information about an apparatus connected to each apparatus. For example, information about a corresponding connection apparatus may be stored in the associated data for each apparatus, for example, the information may include an SN of an optical module, an SN of an ALD, an SN of an RGPS, or an SN of a UPS connected to each apparatus. Therefore, the network management system may query for an ESN and configuration information of a corresponding apparatus based on an SN of a connection apparatus.

The associated data may be stored in the network management apparatus, or may be stored in an independently deployed database. When the associated data is stored in the independently deployed database, the network management apparatus may read the associated data from the database by using a read instruction of the database. If the associated data is stored in the network management apparatus, there may be a plurality of cases. Specifically, the network management system may include one or more network management apparatuses. When the network management system includes only one network management apparatus, the network management apparatus may directly read the associated data locally. When the network management system includes a plurality of network management apparatuses, after a network management apparatus connected to the second apparatus receives the first information sent by the second apparatus, if the associated data storing the configuration information of the first apparatus is stored in another network management apparatus, the network management apparatus connected to the second apparatus may request the associated data from the another network management apparatus.

Secondly, the network management apparatus may query the associated data for the configuration information of the first apparatus based on the first information.

In a possible implementation, the first information may carry information about the one or more connection apparatuses connected to the first apparatus before the replacement, and the network management apparatus may query, based on the information about the connection apparatus carried in the first information, the associated data for the configuration information of the first apparatus corresponding to the connection apparatus. For example, when the first information includes the SN of the optical module, the network management apparatus may query the associated data for configuration information of an apparatus corresponding to the SN of the optical module, to obtain the configuration information of the first apparatus. When the first information includes the SN of the ALD, the network management apparatus may query the associated data for configuration information of an apparatus corresponding to the SN of the ALD, to obtain the configuration information of the first apparatus. When the first information includes the SN of the RGPS, the network management apparatus may query the associated data for configuration information of an apparatus corresponding to the SN of the RGPS, to obtain the configuration information of the first apparatus. When the first information includes the SN of the UPS, the network management apparatus may query the associated data for configuration information of an apparatus corresponding to the SN of the UPS, to obtain the configuration information of the first apparatus.

In a possible implementation, the first information may further carry the information about the first apparatus, for example, the ESN of the first apparatus. The network management apparatus may query, based on the information about the first apparatus, the associated data for corresponding configuration information, to obtain the configuration information of the first apparatus.

Then, after obtaining the configuration information of the first apparatus by querying the associated data, the network management apparatus may obtain the configuration information of the second apparatus based on the configuration information of the first apparatus, and send the configuration information of the second apparatus to the second apparatus.

Specifically, the network management apparatus may directly use the configuration information of the first apparatus as the configuration information of the second apparatus, or may obtain the configuration information of the second apparatus by performing parameter adjustment on the configuration information of the first apparatus.

In a possible implementation, the network management apparatus uses the configuration information of the first apparatus as the configuration information of the second apparatus, and sends the configuration information of the second apparatus to the second apparatus. That is, the network management apparatus may directly deliver configuration information of an old apparatus to a new apparatus, so that the new apparatus reuses configuration of the old apparatus. For example, when a model of the first apparatus is the same as that of the second apparatus, that is, the second apparatus supports a frequency band, power, or the like supported by the first apparatus, the configuration information of the first apparatus may be directly used as the configuration information of the second apparatus, that is, the second apparatus may run normally based on the configuration information of the first apparatus, that is, the configuration information of the first apparatus may be used as the configuration information of the second apparatus.

In a possible implementation, the second apparatus further sends the information about the second apparatus to the network management apparatus, for example, an ESN of the second apparatus. The network management apparatus may generate the configuration information of the second apparatus for the second apparatus based on the configuration information of the first apparatus and the information about the second apparatus. For example, the information about the second apparatus may include the ESN, a component type, a supported parameter range, and the like of the second apparatus. The network management apparatus generates, for the second apparatus based on the information, configuration information that is adaptive to a function supported by the second apparatus, so that the second apparatus can run based on more adaptive configuration information. For example, the network management apparatus may obtain, based on the information about the second apparatus, a range of a frequency band, power, an azimuth, or other parameters supported by the second apparatus. If the range of the frequency band, the power, the azimuth, or other parameters supported by the second apparatus is different from a range indicated by the configuration information of the first apparatus, more adaptive configuration information may be allocated to the second apparatus based on the frequency band, the power, the azimuth, or other parameters supported by the second apparatus, to obtain the configuration information of the second apparatus. For example, a sector frequency band included in the generated configuration information of the second apparatus is within the frequency band supported by the second apparatus, and sector power is within the power range supported by the second apparatus, to allocate more adaptive configuration information to the second apparatus.

Optionally, after obtaining the configuration information of the second apparatus, the network management apparatus may further update the associated data. The information about the second apparatus and the configuration information of the second apparatus are stored in the associated data, or the original information about the first apparatus and the original configuration information of the first apparatus in the associated data are replaced with the information about the second apparatus and the configuration information of the second apparatus, so that the network management apparatus can subsequently query the associated data for the configuration information of the second apparatus.

The foregoing describes the method procedure provided in this application. The following provides more detailed descriptions of the method procedure provided in this application with reference to an application scenario.

For example, that the first apparatus and the second apparatus are radio frequency units in a RAN node is used for description. The first apparatus may be a radio frequency unit 0 mentioned below, and the second apparatus may be a radio frequency unit 1 mentioned below. For the RAN node, refer to the corresponding RAN node 20 in FIG. 2. For the radio frequency unit 0 and the radio frequency unit 1, refer to the descriptions of the radio frequency unit such as the BBU, the AAU, or the RRU.

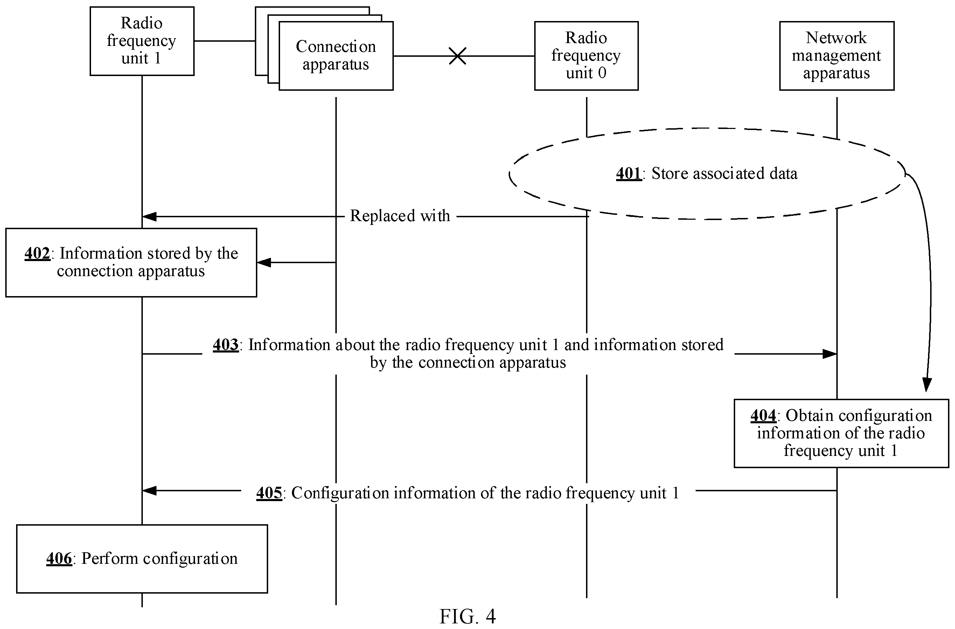

FIG. 4 is a schematic flowchart of another apparatus configuration method according to this application. Details are provided below.

401: Store associated data in a communication network.

After configuration of each radio frequency unit in the communication network is completed, a network management apparatus may store, in the associated data, an association relationship between information about each radio frequency unit in the communication network and configuration information of the radio frequency unit. For example, after configuration of a radio frequency unit 0 is completed, an identifier of the radio frequency unit 0 and corresponding configuration information may be stored in the associated data. For details about the configuration information in the associated data, refer to related descriptions of the configuration information in step 302.

Further, the network management apparatus may store, in the associated data, information about a connection apparatus configured to establish a connection to each radio frequency unit, that is, an association relationship between the information about each radio frequency unit, the configuration information of the radio frequency unit, and the information about the connection apparatus of each radio frequency unit may be stored in the associated data. Specifically, the information about each radio frequency unit in the associated data may include identification information of the radio frequency unit, an apparatus type of the radio frequency unit, identification information of the connection apparatus configured to establish a connection to the radio frequency unit, or the like. The identification information of the radio frequency unit may include an ESN, a name, or the like of the radio frequency unit, and the identification information of the connection apparatus may include a serial number, a name, or the like of the connection apparatus.

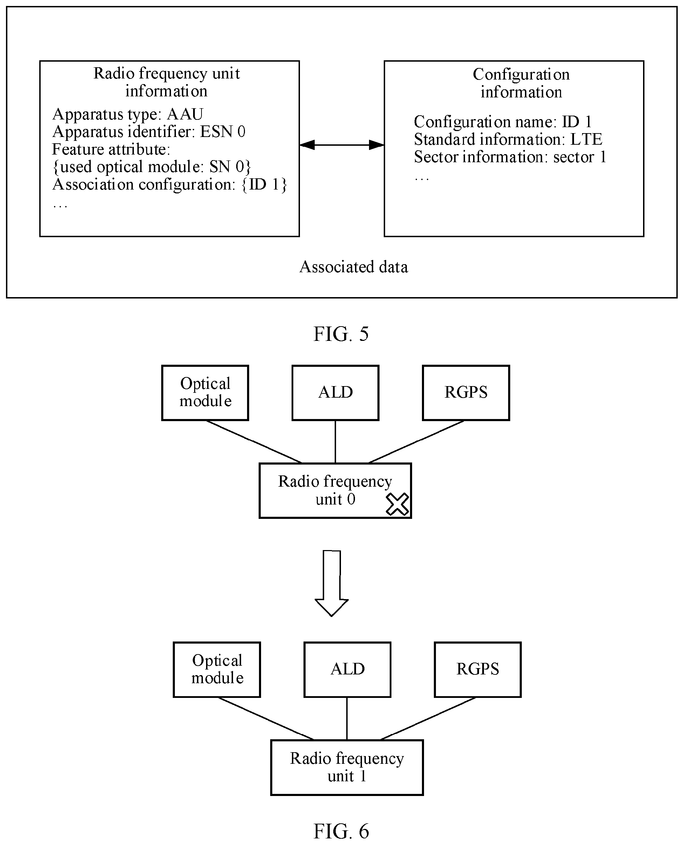

For example, possible associated data may be shown in FIG. 5. The associated data in the figure includes radio frequency unit information and configuration information, where the radio frequency unit information is information about the radio frequency unit 0. The radio frequency unit information may include an apparatus type, an apparatus identifier, a feature attribute, association configuration, and the like of the radio frequency unit 0, and the configuration information is configuration information corresponding to the radio frequency unit 0. The apparatus type is a type of the radio frequency unit 0, for example, a type of an AAU or an RRU. The apparatus identifier is an identifier of the radio frequency unit 0. For example, the identifier of the radio frequency unit 0 is an ESN 0 of the radio frequency unit 0. The feature attribute may indicate a topology relationship between the radio frequency unit 0 and a connection apparatus, and the feature attribute may specifically include identification information of the connection apparatus, for example, an optical module or an ALD, connected to the radio frequency unit 0, for example, may include an identifier SN 0 of an optical module 0 used by the radio frequency unit 0. The association configuration is used to establish an association relationship between apparatus information and the configuration information. The association configuration includes a configuration name for identifying the configuration information of the radio frequency unit 0. For example, if the name of the configuration information of the radio frequency unit 0 is an ID 1, the association configuration in the information about the radio frequency unit 0 may be filled with the ID 1, and the radio frequency unit information of the radio frequency unit 0 is associated with the configuration information of the radio frequency unit 0 by using the association configuration item. In the configuration information of the radio frequency unit 0, the name of the configuration information is the ID 1, standard information is a standard supported by the radio frequency unit 0, for example, LTE, and sector information is a sector in which the radio frequency unit 0 works, for example, a sector 1. The configuration information may further include address information and the like of the radio frequency unit 0, which are not shown in FIG. 5. Any configuration information of the radio frequency unit may be included in the configuration information in the associated data.

In addition, a representation form of the configuration information is not limited to the manner shown in FIG. 5. In a possible case, there are a plurality of pieces of configuration information, and each piece has one configuration name. For example, as shown in FIG. 5, in the apparatus information in the associated data, the association configuration may include the ID 1 and an ID 2, the configuration information corresponding to the ID 1 may include the standard information, the sector information, and the like of the radio frequency unit 0, and configuration information corresponding to the ID 2 may include address information of a radio frequency unit 1, information about a virtual local area network to which the radio frequency unit 1 belongs, and the like.

In a possible implementation, the associated data may be further stored by using a mapping table. For example, the associated data may be shown in Table 1.

**Table 1**

| Site apparatus ESN | Connection apparatus: optical module 1 | Connection apparatus: optical module 2 | Connection apparatus: ALD | Connection apparatus: RGPS | Configuration information |
|---|---|---|---|---|---|
| ESN 1 | Barcode 10 | Barcode 11 | Barcode 12 | Barcode 13 | Configuration information 1 |
| ESN 2 | Barcode 20 | Barcode 21 | Barcode 22 | Barcode 23 | Configuration information 2 |
| ... | ... | ... | ... | ... | ... |

Each column in the mapping table may represent one type of information, and each row may represent information corresponding to one radio frequency unit, including an ESN of the radio frequency unit, an ESN of one or more connection apparatuses, and configuration information.

The site apparatus column in the mapping table may include the ESN of the radio frequency unit, for example, the ESN 1 of the radio frequency unit 0 in this embodiment of this application.

A plurality of columns of connection apparatuses are further set in the mapping table, and each column may represent information about one connection apparatus, for example, an SN of the optical module, the ALD, or the RGPS. One or two columns may be set for each connection apparatus. For example, one radio frequency unit may be connected to two optical modules, or certainly may be connected to two ALDs or three optical modules. Possible cases are not described one by one herein, and only an example in which two columns of optical modules are set for each radio frequency unit is used for description.

The configuration information column may include specific configuration information of the radio frequency unit. For example, the configuration information 1 is configuration information corresponding to an apparatus identified as the ESN 1, the configuration information 2 is configuration information corresponding to an apparatus identified as the ESN 2, and so on. For the configuration information 1, the configuration information 2, or the like, refer to the descriptions of step 302 or the descriptions corresponding to FIG. 5. Details are not described herein again. The foregoing associated data may be stored in a network management apparatus in a network management system, or may be stored in an independently deployed data storage center. If the associated data is stored in the network management system, when the network management system includes only one network management apparatus, the associated data may be stored in the network management apparatus. When the network management system includes a plurality of network management apparatuses, the associated data may alternatively be stored in network management devices in the network management system in a distributed manner. For example, when the network management system includes a plurality of network management apparatuses, each network management apparatus may store associated data including configuration information of a radio frequency unit configured to establish a connection to the network management apparatus.

In a possible scenario, the associated data is stored in a distributed manner. For example, the network management system may include a plurality of network management apparatuses, the associated data may be stored in different distributed network management apparatuses, and data interworking may be implemented between the network management apparatuses. When a network management apparatus needs to obtain the associated data, the network management apparatus may read data stored by another node through interworking between the network management apparatuses. For example, when a network management apparatus 0 needs to read the configuration information of the radio frequency unit 0 from a network management apparatus 1, the network management apparatus 0 may send a request carrying the ESN or an SN of the radio frequency unit 0 to the network management apparatus 1, to request the network management apparatus 1 to query stored associated data for the configuration information corresponding to the ESN or the SN and send the configuration information to the network management apparatus 0.

402: After apparatus replacement, the radio frequency unit 1 collects information stored by the connection apparatus.

In some scenarios, for example, when the radio frequency unit 0 is aged, faulty, or updated, the radio frequency unit may be replaced. After the radio frequency unit 0 is replaced with the radio frequency unit 1, one or more connection apparatuses configured to establish a connection to the radio frequency unit 0 may be reused. In other words, after the radio frequency unit 0 is replaced with the radio frequency unit 1, the one or more connection apparatuses may continue to be connected to the radio frequency unit 1, or a connection is established between the radio frequency unit 1 and the one or more connection apparatuses.

For example, as shown in FIG. 6, the radio frequency unit 0 is connected to one or more connection apparatuses, for example, an optical module, an ALD, or an RGPS. In addition, the connection apparatus may further include a power supply, a UPS, and the like, which are not enumerated one by one herein. If the radio frequency unit 0 needs to be replaced, for example, the radio frequency unit 0 is faulty or aged and cannot communicate normally, or hardware of the radio frequency unit in the network needs to be updated, an operation and maintenance engineer may replace the radio frequency unit 0 with the radio frequency unit 1. A component type of the radio frequency unit 1 may be the same as or different from a component type of the radio frequency unit 0. This may be specifically determined based on an actual application scenario. This is not limited in this application.

After the radio frequency unit 1 is powered up, the radio frequency unit 1 may establish a connection to one or more connection apparatuses, so that the radio frequency unit 1 can obtain, through the established connection, information stored by the one or more connection apparatuses. The information stored by the connection apparatus may be actively sent by each connection apparatus to the radio frequency unit 1, or may be actively requested by the radio frequency unit 1 from each connection apparatus for information stored by each apparatus. This may be specifically determined based on an actual application scenario.

Specifically, the information about the connection apparatus may include but is not limited to a name, a serial number, another identifier, or the like of the connection apparatus, for example, an SN of an optical module, an SN of an ALD, a serial number (serial number, SN) of an RGPS, an SN of a UPS, or an identifier of another module.

403: The radio frequency unit 1 sends first information to the network management apparatus, including information about the radio frequency unit 1 and the information stored by the connection apparatus.

The information about the radio frequency unit 1 may include an ESN, an apparatus type, a name, another identifier, or the like of the radio frequency unit 1, and the apparatus type of the radio frequency unit 1 may specifically include types such as an AAU, an RRU, an RRH, an RFU, and an RU.

After being powered up, the radio frequency unit 1 may establish a connection to the network management apparatus, and then may send, based on the connection to the network management apparatus, an identifier of the radio frequency unit 1 and the information stored by the connection apparatus to the network management apparatus, to request configuration information of the radio frequency unit 1 from the network management apparatus.

Generally, in site replacement, a new apparatus after the replacement may have no available configuration, and therefore needs to request configuration information from the network management apparatus. In this implementation of this application, the new apparatus may request the required configuration information based on the information about the connection apparatus, which is equivalent to sending an accurate request credential to the network management apparatus.

When sending the first information to the network management apparatus, the radio frequency unit 1 may send the first information through a data interface between the radio frequency unit 1 and the network management apparatus.

In a possible implementation, the radio frequency unit 1 may send the first information through a fronthaul interface, a common public radio interface (common public radio interface, CPRI), an enhanced common public radio interface (enhanced common public radio interface, eCPRI), or the like.

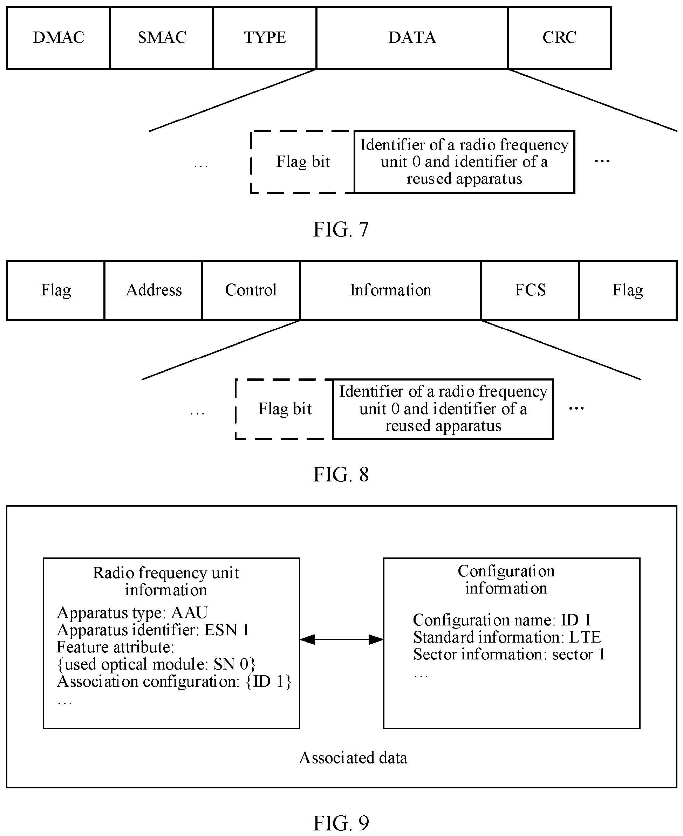

Specifically, in a possible case, a format of the first information may be a format of an Ethernet (Ethernet, ETH) frame. In FIG. 7, a format of an Ethernet II frame is used as an example, and the first information is in the Ethernet II frame. The Ethernet II frame may include but is not limited to a destination media access control (destination media access control, DMAC) address field, a source media access control (source media access control, SMAC) address field, a type (TYPE) field, a data (DATA) field, and a cyclic redundancy code (cyclic redundancy code, CRC) field. Specifically, the first information is in the data field. As shown in FIG. 7, the data field includes the first information. Further, optionally, a flag bit may be placed in a field of a preceding part of the first information in the data field, and the flag bit may be used to locate a start location of the first information. In addition, the Ethernet frame may alternatively be an Institute of Electrical and Electronics Engineers (Institute of Electrical and Electronics Engineers, IEEE) 802.3 frame, which is similar to the Ethernet II frame. The IEEE 802.3 frame also includes a data field, and the first information may also be in the data field. Further, optionally, a flag bit may be placed before a start location of the first information in the IEEE 802.3 frame, and is not shown in the figure.

In another possible case, a format of the first information is a format of a high-level data link control (high-level data link control, HDLC) frame. In FIG. 8, the format of the HDLC frame is used as an example, and the first information is in the HDLC frame. The HDLC frame may include but is not limited to a flag (flag) field, an address (address) field, a control (control) field, an information (information) field, a frame check sequence (frame check sequence, FCS) field, and the like. The information field includes the first information. Similarly, a flag bit may also be placed before the first information, and is used to locate the first information.

In addition, regardless of which of the foregoing possible cases, the flag bit may be placed in a plurality of manners. For example, a flag bit may be placed before the identifier of the radio frequency unit 0, and a flag bit may also be placed before an identifier of the one or more connection apparatuses used by the radio frequency unit 0 before the replacement. In addition, a placing sequence of the identifier of the radio frequency unit 0 and the identifier of the connection apparatus (for example, an identifier of the optical module) is not limited in this application.

404: The network management apparatus obtains the configuration information of the radio frequency unit 1.

After receiving the first information uploaded by the radio frequency unit 1, the network management apparatus may obtain the information about the radio frequency unit 0 or information about at least one connection apparatus carried in the first information, and obtain the configuration information corresponding to the radio frequency unit 0 from the associated data based on the information about the radio frequency unit 0 or the information about the at least one connection apparatus. Then, the configuration information corresponding to the radio frequency unit 1 is obtained based on the configuration information corresponding to the radio frequency unit 0. For example, the configuration information corresponding to the radio frequency unit 0 is used as the configuration information corresponding to the radio frequency unit 1, or the configuration information corresponding to the radio frequency unit 0 is adjusted to obtain configuration information that is more adaptive to configuration of the radio frequency unit 1. For the configuration information, refer to the descriptions corresponding to step 302 or FIG. 5. Details are not described herein again.

The network management apparatus may determine, from the associated data based on the received first information, the configuration information associated with the radio frequency unit 0. For example, with reference to FIG. 5, the first information may carry an SN 0 of an optical module connected to the replaced radio frequency unit 1. The network management apparatus queries the associated data for the radio frequency unit information of the radio frequency unit 0 including the SN 0, further reads the association configuration ID 1, and then reads the configuration information whose configuration name is the ID 1 to obtain the configuration information of the radio frequency unit 0.

After reading the configuration information of the radio frequency unit 0, the network management apparatus may directly use the configuration information of the radio frequency unit 0 as the configuration information of the radio frequency unit 1, or may generate more adaptive configuration information for the radio frequency unit 1 by adjusting the configuration information of the radio frequency unit 0.

In a possible scenario, the configuration of the radio frequency unit 0 may be used as the configuration of the radio frequency unit 1, for example, the configuration of the radio frequency unit 0 is directly delivered to the radio frequency unit 1. For example, if the radio frequency unit 0 is faulty and is replaced with the radio frequency unit 1, and the replaced radio frequency unit 1 and the radio frequency unit 0 support a same parameter, the radio frequency unit 1 may directly inherit the configuration of the radio frequency unit 0, that is, the network management apparatus may directly use the configuration of the radio frequency unit 0 as the configuration of the radio frequency unit 1, to obtain the configuration information of the radio frequency unit 1.

In a possible scenario, the radio frequency unit 1 further uploads the first information and the information about the radio frequency unit 1, for example, information such as the ESN, the name, or the component type of the radio frequency unit 1. In this scenario, the network management apparatus may determine the configuration information of the radio frequency unit 0 from the associated data based on the received first information, and adaptively generate adaptive configuration information for the radio frequency unit 1. For example, when the radio frequency unit 0 and the radio frequency unit 1 have different models, the network management apparatus may learn of, based on the models of the radio frequency unit 0 and the radio frequency unit 1, ranges of function parameters supported by the radio frequency unit 0 and the radio frequency unit 1, for example, a supported power range or communication frequency range. For example, the radio frequency unit 1 supports more standards or sectors than the radio frequency unit 0. In this case, the network management apparatus may generate, for the radio frequency unit 1, configuration information in which more standards or different sectors than those of the radio frequency unit 0 are configured, to obtain configuration information that is adaptive to the radio frequency unit 1, and deliver the configuration information to the radio frequency unit 1.

405: The network management apparatus delivers the configuration information to the radio frequency unit 1.

After obtaining the configuration information of the radio frequency unit 1, the network management apparatus may deliver the configuration information to the radio frequency unit 1.

In addition, after obtaining the configuration information for the radio frequency unit 1, the network management apparatus may update the associated data. For example, as shown in FIG. 9, for related descriptions of associated data shown in FIG. 9, refer to the descriptions corresponding to FIG. 5. In this embodiment, the identifier ESN 0 of the radio frequency unit 0 in an association relationship may be updated to the identifier ESN 1 of the radio frequency unit 1. In addition, if the configuration information is updated, data of the configuration information may also be updated correspondingly. For example, if a standard of the radio frequency unit is updated, a standard of the radio frequency unit 1 in the associated data may be updated.

406: The radio frequency unit 1 performs configuration.

After receiving the configuration information, the radio frequency unit 1 configures parameters of the radio frequency unit 1 based on the configuration information, so that the radio frequency unit 1 runs normally in the communication network.

For example, sector information in the configuration information of the radio frequency unit 1 may include a frequency, power, bandwidth, an azimuth, or other information of a sector. After receiving the configuration information, the radio frequency unit 1 may use the information carried in the configuration information to configure a frequency, power, bandwidth, an azimuth, or other parameters of a sector corresponding to the radio frequency unit 1, thereby implementing sector parameter configuration of the radio frequency unit 1.

Optionally, after completing the configuration, the radio frequency unit 1 may further send a configuration confirmation message to the network management apparatus, and after the network management apparatus confirms the configuration of the radio frequency unit 1, a subsequent communication procedure may be performed.

Therefore, in this implementation of this application, the radio frequency unit 1 may obtain the required configuration information based on the information stored by the connection apparatus, and no manual or third-party involvement is required in a process of obtaining the configuration information, thereby reducing labor costs and implementing more intelligent configuration of the radio frequency unit 1. In addition, the information stored by the connection apparatus may be used to more accurately distinguish whether the replaced apparatus is a front-end apparatus or a remote apparatus, thereby implementing a more accurate apparatus configuration, avoiding a configuration failure caused by incorrect information or a large information error, and improving a configuration success rate.

It may be understood as that, in this implementation of this application, a replaced radio frequency unit may obtain, based on information about a radio frequency unit before replacement (for example, an ESN of the radio frequency unit before the replacement), information stored by a connection apparatus of the radio frequency unit before the replacement, to request, based on the information stored by the connection apparatus of the radio frequency unit before the replacement, configuration information (for example, power, bandwidth, or a frequency) of the replaced radio frequency unit from the network management apparatus. For example, after being powered up, the replaced radio frequency unit may report an ESN of the replaced radio frequency unit and an SN of a peripheral interconnected connection apparatus. The network management apparatus searches for the configuration information of the radio frequency unit 0 based on the information, obtains the configuration information of the radio frequency unit 1 based on the configuration information of the radio frequency unit 0, and configures the configuration information in the radio frequency unit 1, thereby completing the replacement of the radio frequency unit.

For example, for a manner of planning corresponding site-deployment data based on a site name and a site apparatus ESN, after the apparatus is powered up, the site-deployment data is obtained based on an ESN number to activate a base station. A front-end installation engineer needs to communicate with a back-end network management engineer about installation site module ESN information, and the network management engineer only associates the data after obtaining the site apparatus ESN. The whole process requires a large amount of manual interaction and is complex. However, in the method provided in this embodiment of this application, the method for automatically obtaining the site-deployment data based on the information about the connection apparatus (for example, an optical module, an ALD, or an RGPS) resolves a problem of a complex procedure in which the site-deployment data can be obtained only through manual intervention in a base station activation process.

For another example, for a manner of obtaining site-deployment data based on location information of a to-be-deployed site, in the method provided in this embodiment of this application, in the solution of obtaining the site-deployment data based on the information stored by the connection apparatus, configuration may be accurately performed for the replaced apparatus, and a problem that a front-end apparatus and a remote apparatus cannot be accurately distinguished in an existing site-deployment configuration procedure can be further resolved.

In addition, in some possible scenarios, data stored in the connection apparatus may include the information about the connection apparatus, and may further include information written by the radio frequency unit 0. The following describes in detail a procedure of writing, to the connection apparatus by the radio frequency unit 0 before the replacement, information that needs to be backed up.

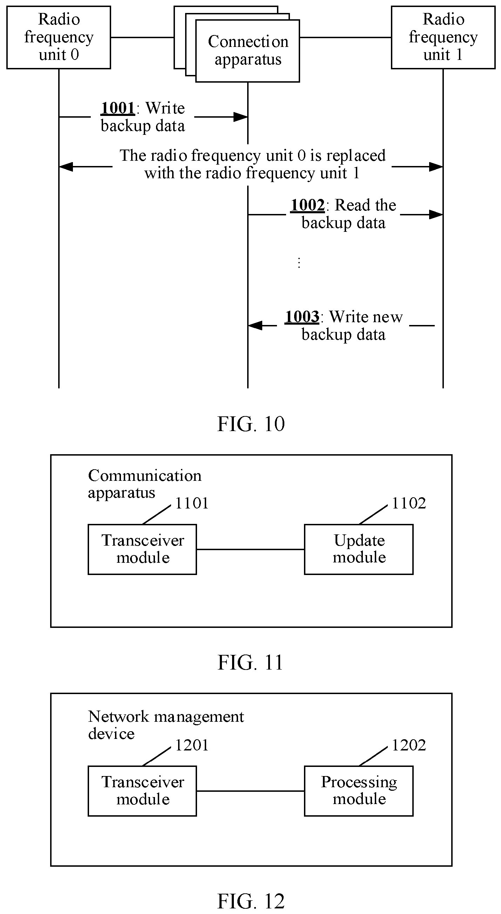

For example, FIG. 10 is a schematic flowchart of another apparatus configuration method according to this application.

1001: A radio frequency unit 0 writes backup data to a connection apparatus.

To implement data backup, before the radio frequency unit 0 is replaced, when the radio frequency unit 0 works normally in a communication network, data that needs to be backed up may be stored in storage space of one or more connection apparatuses.

The data that needs to be backed up may include information about the radio frequency unit 0 or all or some of configuration information of the radio frequency unit 0. The information about the radio frequency unit 0 may specifically include an ESN, a name, a component type, or other information of the radio frequency unit 0. For the configuration information of the radio frequency unit 0, refer to the descriptions of the configuration information of the second apparatus in step 302. Details are not described herein again.

For example, if storage space is set in one or more connection apparatuses, for example, if storage space is set in an optical module, and the storage space is larger than a space size occupied by the configuration information of the radio frequency unit 0, the radio frequency unit 0 may directly write all of the configuration information to the storage space, to implement full backup of the configuration information. For another example, if storage space set in the connection apparatus is small, for example, smaller than a space size occupied by the configuration information of the radio frequency unit 0, the radio frequency unit 0 may write the information about the radio frequency unit 0 to the storage space, for example, may write the ESN or the component type (for example, a type of an AAU, an RRU, an RRH, an RFU, or an RU) of the radio frequency unit 0 to the storage space.

Further, for the backup data stored by the connection apparatus, refer to the related descriptions in step 301 or step 403. Details are not described herein again.

1002: After the radio frequency unit 0 is replaced with a radio frequency unit 1, the radio frequency unit 1 reads the backup data from the connection apparatus.

After the radio frequency unit 0 is replaced with the radio frequency unit 1, the radio frequency unit 1 may read the backup data stored by the connection apparatus.

When the configuration information of the radio frequency unit 0 is stored in the storage space of the connection apparatus, the radio frequency unit 1 may directly read available configuration information from the storage space, and perform configuration based on the read configuration information, to complete an apparatus configuration more efficiently.

If the information about the radio frequency unit 0, for example, information such as the ESN, the name, or the component type of the radio frequency unit 0, is stored in the storage space of the connection apparatus, the radio frequency unit 1 may request configuration information from a network management apparatus based on the read information. For a specific step of requesting the configuration information of the radio frequency unit 1 by the radio frequency unit 1 from the network management apparatus, refer to the descriptions corresponding to FIG. 3 to FIG. 9. Details are not described herein again.

1003: The radio frequency unit 1 writes new backup data to the connection apparatus.

After completing the configuration, the radio frequency unit 1 may further write the new backup data to the storage space of the connection apparatus, where the new backup data may include information about the radio frequency unit 1 or the configuration information of the radio frequency unit 1, to back up the information about the radio frequency unit 1. The information about the radio frequency unit 1 may include an ESN, a name, a component type, or other information of the radio frequency unit 1. For the configuration information of the radio frequency unit 1, refer to the descriptions of the configuration information of the second apparatus in step 302. Details are not described herein again.

Therefore, in this implementation of this application, when the storage space is set in the connection apparatus, the information about the radio frequency unit 0 before the replacement may be backed up in the storage space, for example, the configuration information, identification information, or component type information of the radio frequency unit 0 before the replacement may be backed up, so that when the radio frequency unit 0 is replaced with the radio frequency unit 1, the radio frequency unit 1 can request the configuration information of the radio frequency unit 1 from the network management apparatus by reading the information, backed up in the storage space, about the radio frequency unit 0 before the replacement, to obtain the required configuration information more efficiently and accurately, and improve configuration efficiency and configuration accuracy of the new apparatus.

The foregoing describes the method procedures provided in this application. The following describes, with reference to the foregoing method procedures, structures of apparatuses for performing the methods provided in this application.

FIG. 11 is a diagram of a structure of a communication apparatus according to this application. The communication apparatus may be configured to perform the steps performed by the second apparatus in FIG. 3 to FIG. 10. The communication apparatus includes:
a transceiver module 1101, configured to send first information if a first apparatus is replaced with a second apparatus, where the first information includes information stored by at least one connection apparatus, the at least one connection apparatus is an apparatus configured to establish a connection to the second apparatus, and before the first apparatus is replaced, the at least one connection apparatus is connected to the first apparatus.

The transceiver module 1101 is further configured to receive configuration information, where the configuration information is used to configure the second apparatus.

In a possible implementation, the apparatus may further include an update module 1102, configured to update a local configuration based on the configuration information.

In a possible implementation, the at least one connection apparatus includes one or more of the following: an optical module, an antenna line device, a global positioning system ground receiver, or a power supply. The optical module may be configured to perform conversion between an optical signal and an electrical signal, to convert the electrical signal into the optical signal for transmission. The antenna line apparatus is configured to provide hardware support for wireless transmission of data, and may convert an electrical signal into an electromagnetic wave signal, to perform wireless transmission on the data. The global positioning system ground receiver is configured to obtain positioning information.

In a possible implementation, the information stored by the at least one connection apparatus includes at least one of the following: a serial number of the optical module, a serial number of the antenna line device, a serial number of the global positioning system receiver, or a serial number of the power supply module.

In a possible implementation, the configuration information includes one or more of the following configuration information of the second apparatus: standard information, sector information, address information, or information about a virtual local area network to which the second apparatus belongs.

In a possible implementation, the transceiver module 1101 is further configured to obtain the first information.

In a possible implementation, the transceiver module 1101 is specifically configured to read the first information from the at least one connection apparatus, where the first information includes information written by the first apparatus to storage space of the at least one connection apparatus, and before the first apparatus is replaced with the second apparatus, the first information corresponds to the first apparatus.

In a possible implementation, the transceiver module 1101 is further configured to: after receiving the configuration information, write second information to the at least one connection apparatus, where the second information is used by a third apparatus to obtain a corresponding configuration from a network management apparatus after the second apparatus is replaced with the third apparatus.

In a possible implementation, the transceiver module 1101 is further configured to send information about the second apparatus, where the information about the second apparatus may include an identifier of the second apparatus.

FIG. 12 is a diagram of a structure of a network management apparatus according to this application. The communication apparatus may be configured to perform the steps performed by the network management apparatus in FIG. 3 to FIG. 10. The network management apparatus may include:
a transceiver module 1201, configured to receive first information, where the first information includes information about at least one connection apparatus, and the at least one connection apparatus is an apparatus configured to establish a connection to a second apparatus.

The transceiver module 1201 is further configured to send configuration information of the second apparatus based on the first information, where the configuration information of the second apparatus is used to configure the second apparatus.

In a possible implementation, the network management apparatus may further include:
a processing module 1202, configured to obtain configuration information of the first apparatus from associated data based on the first information, where the associated data includes data of a plurality of apparatuses, and the plurality of apparatuses include the first apparatus.

The transceiver module 1201 is further configured to send the configuration information of the second apparatus based on the configuration information of the first apparatus.

In a possible implementation, the processing module 1202 is configured to use the configuration information of the first apparatus as the configuration information of the second apparatus.

In a possible implementation, the transceiver module 1201 is further configured to receive information about the second apparatus.

The processing module is configured to generate the configuration information for the second apparatus based on the configuration information of the first apparatus and the information about the second apparatus.

In a possible implementation, the configuration information of the second apparatus includes one or more of the following configuration information of the second apparatus: standard information, sector information, address information, or information about a virtual local area network to which the second apparatus belongs.

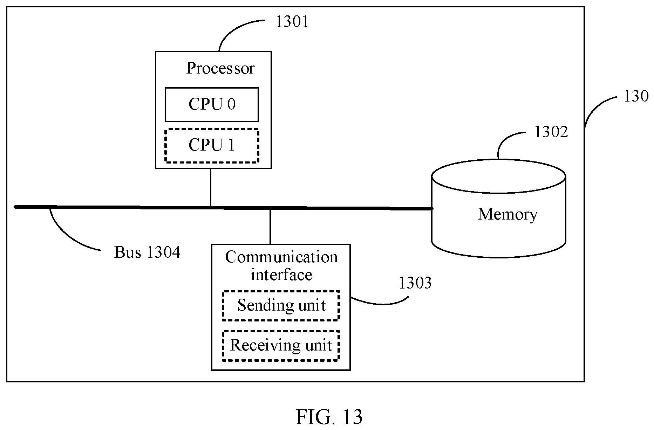

FIG. 13 is a diagram of a hardware structure of a communication apparatus 130 according to an embodiment of this application. The communication apparatus 130 may be configured to implement a function of the second apparatus or the network management apparatus in the foregoing method.

The communication apparatus 130 shown in FIG. 13 may include a processor 1301, a memory 1302, a communication interface 1303, and a bus 1304. The processor 1301, the memory 1302, and the communication interface 1303 may be connected to each other through the bus 1304.

The processor 1301 is a control center for generating the communication apparatus 130, and may be a general-purpose central processing unit (central processing unit, CPU), another general-purpose processor, or the like. The general-purpose processor may be a microprocessor, any conventional processor, or the like.

For example, the processor 1301 may include one or more CPUs, for example, a CPU 0 and a CPU 1 shown in FIG. 13.

The memory 1302 may be a read-only memory (read-only memory, ROM) or another type of static storage device that can store static information and instructions, a random access memory (random access memory, RAM), or another type of dynamic storage device that can store information and instructions, or may be an electrically erasable programmable read-only memory (electrically erasable programmable read-only memory, EEPROM), a magnetic disk storage medium or another magnetic storage device, or any other medium that can be used to carry or store expected program code in a form of instructions or a data structure and that can be accessed by a computer, but is not limited thereto.

In a possible implementation, the memory 1302 may be independent of the processor 1301. The memory 1302 may be connected to the processor 1301 through the bus 1304, and is configured to store data, instructions, or program code. When invoking and executing the instructions or the program code stored in the memory 1302, the processor 1301 can implement a method provided in embodiments of this application.

In another possible implementation, the memory 1302 may alternatively be integrated with the processor 1301.

The communication interface 1303 is configured to connect the communication apparatus 130 to another device through a communication network. The communication network may be an Ethernet, a radio access network (radio access network, RAN), a wireless local area network (wireless local area network, WLAN), or the like. The communication interface 1303 may include a receiving unit configured to receive data and a sending unit configured to send data.

The bus 1304 may be an industry standard architecture (industry standard architecture, ISA) bus, a peripheral component interconnect (peripheral component, PCI) bus, an extended industry standard architecture (extended industry standard architecture, EISA) bus, or the like. The bus may be classified into an address bus, a data bus, a control bus, and the like. For ease of representation, only one bold line is used for representation in FIG. 13, but this does not mean that there is only one bus or only one type of bus.

It should be noted that the structure shown in FIG. 13 does not constitute a limitation on the communication apparatus 130. In addition to the components shown in FIG. 13, the communication apparatus 130 may include more or fewer components than those shown in the figure, or combine some components, or have different component arrangements.

Based on the descriptions of the foregoing implementations, a person skilled in the art may clearly understand that this application may be implemented by software in addition to necessary universal hardware, or implemented by dedicated hardware, including an applicationspecific integrated circuit, a dedicated CPU, a dedicated memory, a dedicated component, and the like. Generally, any functions completed by a computer program can be easily implemented by using corresponding hardware. In addition, a specific hardware structure used to implement a same function may be in various forms, for example, in a form of an analog circuit, a digital circuit, or a dedicated circuit. However, for this application, a software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a read-only memory (read-only memory, ROM), a random access memory (random access memory, RAM), a magnetic disk, or an optical disc of a computer, and includes several instructions for instructing a computer device (which may be a personal computer, a server, a network device, or the like) to perform the methods described in embodiments of this application.

All or some of the foregoing embodiments may be implemented by using software, hardware, firmware, or any combination thereof. When the software is used for implementation, all or some of embodiments may be implemented in a form of a computer program product.

An embodiment of this application further provides a computer-readable storage medium. The computer-readable storage medium stores a program used for training a model or executing an inference task. When the program is run on a computer, the computer is caused to perform all or some of the steps in the methods described in embodiments shown in FIG. 4 to FIG. 12.

An embodiment of this application further provides a digital processing chip. A circuit and one or more interfaces that are configured to implement the processor or a function of the processor are integrated into the digital processing chip. When a memory is integrated into the digital processing chip, the digital processing chip may complete the method steps in any one or more embodiments in the foregoing embodiments. When a memory is not integrated into the digital processing chip, the digital processing chip may be connected to an external memory through a communication interface. The digital processing chip implements the method steps in any one or more embodiments in the foregoing embodiments based on program code stored in the external memory.

An embodiment of this application further provides a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state disk Solid-State Disk (SSD)), or the like.

A person of ordinary skill in the art may understand that all or some of the steps of the methods in embodiments may be completed by a program instructing relevant hardware. The program may be stored in a computer-readable storage medium. The storage medium may include a ROM, a RAM, a magnetic disk, or an optical disc.

In the specification, claims, and accompanying drawings of this application, the terms "first", "second", and the like are intended to distinguish between similar objects but do not necessarily indicate a specific order or sequence. It should be understood that the data termed in such a way are interchangeable in proper circumstances so that embodiments described herein can be implemented in other orders than the order illustrated or described herein. The term "and/or" in this application describes only an association relationship for describing associated objects and represents that three relationships may exist. For example, A and/or B may represent the following three cases: Only A exists, both A and B exist, and only B exists. In addition, the character "/" in this specification generally represents an "or" relationship between the associated objects. In addition, the terms "include", "have", and any variants thereof are intended to cover a nonexclusive inclusion. For example, a process, a method, a system, a product, or a device including a series of steps or modules is not necessarily limited to those clearly listed steps or modules, but may include other steps or modules that are not clearly listed or are inherent to the process, the method, the product, or the device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effects can be achieved. Division into the modules in this application is logical division. During implementation in an actual application, there may be another division manner. For example, a plurality of modules may be combined or integrated into another system, or some features may be ignored or not executed. In addition, the displayed or discussed mutual coupling or direct coupling or communication connection may be through some ports, and the indirect coupling or communication connection between modules may be in an electrical form or another similar form. This is not limited in this application. In addition, modules or submodules described as separate components may be or may not be physically separate, or may be or may not be physical modules, or may not be grouped into a plurality of circuit modules. Objectives of the solutions of this application may be achieved by selecting some or all of the modules according to actual requirements.

## Claims

1. An apparatus configuration method, comprising:
if a first apparatus is replaced with a second apparatus, sending, by the second apparatus, first information, wherein the first information comprises information stored by at least one connection apparatus, the at least one connection apparatus is an apparatus configured to establish a connection to the second apparatus, and before the first apparatus is replaced, the at least one connection apparatus is connected to the first apparatus; and
receiving, by the second apparatus, configuration information, wherein the configuration information is used to configure the second apparatus.

2. The method according to claim 1, wherein the method further comprises:
updating, by the second apparatus, a local configuration based on the configuration information.

3. The method according to claim 1 or 2, wherein the at least one connection apparatus comprises one or more of the following:
an optical module, an antenna line device, a global positioning system receiver, or a power supply module.

4. The method according to claim 3, wherein the information stored by the at least one connection apparatus comprises at least one of the following:
a serial number of the optical module, a serial number of the antenna line device, a serial number of the global positioning system receiver, or a serial number of the power supply module.

5. The method according to any one of claims 1 to 4, wherein the configuration information comprises one or more of the following information of the second apparatus:
standard information, sector information, address information, or information about a virtual local area network to which the second apparatus belongs.

6. The method according to any one of claims 1 to 5, wherein the method further comprises:
obtaining, by the second apparatus, the first information.

7. The method according to claim 6, wherein obtaining, by the second apparatus, the first information comprises:
reading, by the second apparatus, the first information from the at least one connection apparatus, wherein before the first apparatus is replaced with the second apparatus, the first information corresponds to the first apparatus.

8. The method according to any one of claims 1 to 7, wherein after receiving, by the second apparatus, the configuration information, the method further comprises:
writing, by the second apparatus, second information to the at least one connection apparatus, wherein the second information comprises information about the second apparatus, and the information about the second apparatus comprises an identifier of the second apparatus.

9. The method according to any one of claims 1 to 8, wherein before receiving, by the second apparatus, the configuration information, the method further comprises:
sending, by the second apparatus, the information about the second apparatus.

10. An apparatus configuration method, comprising:
receiving first information, wherein the first information comprises information stored by at least one connection apparatus, the at least one connection apparatus is an apparatus configured to establish a connection to a second apparatus, and before a first apparatus is replaced with the second apparatus, the at least one connection apparatus is connected to the first apparatus; and
sending configuration information of the second apparatus based on the first information, wherein the configuration information of the second apparatus is used to configure the second apparatus.

11. The method according to claim 10, wherein sending the configuration information based on the first information comprises:
obtaining configuration information of the first apparatus from associated data based on the first information, wherein the associated data comprises configuration information corresponding to a plurality of apparatuses, and the plurality of apparatuses comprise the first apparatus; and
sending the configuration information of the second apparatus based on the configuration information of the first apparatus.

12. The method according to claim 11, wherein sending the configuration information of the second apparatus based on the configuration information of the first apparatus comprises:
using the configuration information of the first apparatus as the configuration information of the second apparatus, and sending the configuration information of the second apparatus.

13. The method according to claim 11, wherein the method further comprises:
receiving information about the second apparatus; and
sending the configuration information of the second apparatus based on the configuration information of the first apparatus comprises:
generating the configuration information of the second apparatus based on the configuration information of the first apparatus and the information about the second apparatus, and sending the configuration information of the second apparatus.

14. The method according to any one of claims 10 to 13, wherein the configuration information comprises one or more of the following information of the second apparatus:
standard information, sector information, address information, or information about a virtual local area network to which the second apparatus belongs.

15. An apparatus configuration method, comprising:
if a first apparatus is replaced with a second apparatus, sending, by the second apparatus, first information to a network management apparatus, wherein the first information comprises information stored by at least one connection apparatus, the at least one connection apparatus is an apparatus configured to establish a connection to the second apparatus, and before the first apparatus is replaced, the at least one connection apparatus is connected to the first apparatus; and
sending, by the network management apparatus, configuration information of the second apparatus to the second apparatus based on the first information, wherein the configuration information of the second apparatus is used to configure the second apparatus.

16. The method according to claim 15, wherein the method further comprises:
updating, by the second apparatus, a local configuration based on the configuration information of the second apparatus.

17. The method according to claim 15 or 16, wherein the at least one connection apparatus comprises one or more of the following:
an optical module, an antenna line device, a global positioning system receiver, or a power supply module.

18. The method according to claim 17, wherein the information stored by the at least one connection apparatus comprises at least one of the following:
a serial number of the optical module, a serial number of the antenna line device, a serial number of the global positioning system receiver, or a serial number of the power supply module.

19. The method according to any one of claims 15 to 18, wherein the configuration information of the second apparatus comprises one or more of the following information of the second apparatus:
standard information, sector information, address information, or information about a virtual local area network to which the second apparatus belongs.

20. The method according to any one of claims 15 to 19, wherein the method further comprises:
obtaining, by the second apparatus, the first information.

21. The method according to claim 20, wherein obtaining, by the second apparatus, the first information comprises:
reading, by the second apparatus, the first information from the at least one connection apparatus, wherein before the first apparatus is replaced with the second apparatus, the first information corresponds to the first apparatus.

22. The method according to any one of claims 15 to 21, wherein sending, by the network management apparatus, the configuration information of the second apparatus to the second apparatus based on the first information comprises:
obtaining, by the network management apparatus, configuration information of the first apparatus from associated data based on the first information, wherein the associated data comprises configuration information corresponding to a plurality of apparatuses, and the plurality of apparatuses comprise the first apparatus; and
sending, by the network management apparatus, the configuration information of the second apparatus to the second apparatus based on the configuration information of the first apparatus.

23. The method according to claim 22, wherein sending, by the network management apparatus, the configuration information of the second apparatus to the second apparatus based on the configuration information of the first apparatus comprises:
using, by the network management apparatus, the configuration information of the first apparatus as the configuration information of the second apparatus, and sending the configuration information of the second apparatus.

24. The method according to claim 22, wherein the method further comprises:
receiving, by the network management apparatus, information about the second apparatus; and
sending, by the network management apparatus, the configuration information of the second apparatus based on the configuration information of the first apparatus comprises:
generating, by the network management apparatus, the configuration information of the second apparatus for the second apparatus based on the configuration information of the second apparatus and the information about the second apparatus, and sending the configuration information of the second apparatus

25. A communication system, comprising a network management apparatus and a second apparatus, wherein
the second apparatus is configured to perform the method according to any one of claims 1 to 9; and
the network management apparatus is configured to perform the method according to any one of claims 10 to 14.

26. An apparatus, comprising a unit configured to perform the method according to any one of claims 1 to 9.

27. An apparatus, comprising a unit configured to perform the method according to any one of claims 10 to 14.

28. A computer-readable storage medium, comprising instructions, wherein when the instructions are run on a computer, the computer is caused to perform the method according to any one of claims 1 to 9, or perform the method according to any one of claims 10 to 14.

29. A computer program product, comprising a computer program or instructions, wherein when the computer program or the instructions are executed by a processor, the method according to any one of claims 1 to 9 or claims 10 to 14 is implemented.
